# EUROPEAN PATENT SPECIFICATION

(11) **EP 4 661 260 B1**
(45) Date of publication and mention of the grant of the patent: **19.08.2026**
(21) Application number: 23919672.8
(22) Date of filing: 01.02.2023
(51) Int. Cl.: H02K 21/14, H02K 16/02, H02K 49/10, H02K 7/18

(54) **ROTATION DEVICE**
ROTATIONSVORRICHTUNG
DISPOSITIF DE ROTATION

(43) Date of publication of application: 10.12.2025
(73) Proprietor: MITSUBISHI ELECTRIC CORPORATION, Chiyoda-ku Tokyo 100-8310 (JP)
(72) Inventor: SAMATA, Kohei, Tokyo 100-8310 (JP); TAMIYA, Yoichi, Tokyo 100-8310 (JP); SASAI, Takuma, Tokyo 100-8310 (JP)
(74) Representative: Mewburn Ellis LLP
(86) International application number: PCT/JP2023/003143
(87) International publication number: WO 2024/161532

(56) References cited:
- WO-A1-2013/011809
- WO-A1-2021/210118
- WO-A1-2022/258948
- WO-A2-2009/138728
- CN-A- 107 171 524
- US-A1- 2013 134 815
- US-A1- 2013 134 815
- US-A1- 2019 028 015

## Description

### TECHNICAL FIELD

The present disclosure relates to a rotation device.

### BACKGROUND ART

A rotation device having a triple cylindrical structure in which an inner cylindrical portion, an intermediate cylindrical portion, and an outer cylindrical portion are concentrically arranged has been known. In this rotation device, each of the three cylindrical portions serves as a stator or a rotor. For example, a rotation device in which the intermediate cylindrical portion serves as a stator and the inner cylindrical portion and the outer cylindrical portion serve as rotors is referred to as a magnetic gear device. In the magnetic gear device, rotation torque is transmitted between the inner cylindrical portion and the outer cylindrical portion via the intermediate cylindrical portion provided with magnetic-pole pieces. Thus, the magnetic gear device is applied to, for example, a speed increasing gear of a wind power generation device, a speed change gear of an automobile, or the like. In addition, a rotation device in which the outer cylindrical portion serves as a stator and the inner cylindrical portion and the intermediate cylindrical portion serve as rotors is referred to as a magnetic-geared rotary electric machine. In the magnetic-geared rotary electric machine, when the intermediate cylindrical portion including magnetic-pole pieces is rotated by external motive power, the inner cylindrical portion including magnets rotates at a predetermined speed increase ratio. In the magnetic-geared rotary electric machine, change in magnetic flux caused by the rotation of the inner cylindrical portion generates a current in a coil provided in the outer cylindrical portion. Thus, the magnetic-geared rotary electric machine is applied to, for example, an electric generator of a wind power generation device or the like.

In the rotation device having the triple cylindrical structure, the width in the radial direction of the intermediate cylindrical portion is small in order to strengthen the magnetic coupling between the inner cylindrical portion and the outer cylindrical portion. In addition, the intermediate cylindrical portion includes magnetic-pole pieces arranged in the circumferential direction. Each magnetic-pole piece has a structure in which magnetic materials such as electromagnetic steel sheets are stacked in the axial direction. In a magnetic gear device in which the intermediate cylindrical portion serves as a stator, an electromagnetic force acts in the radial direction on magnetic-pole pieces of the intermediate cylindrical portion, and a gravitational force due to the own weight also acts thereon. In addition, in a magnetic-geared rotary electric machine in which the intermediate cylindrical portion serves as a rotor, an electromagnetic force acts in the radial direction on magnetic-pole pieces of the intermediate cylindrical portion, and a gravitational force due to the own weight and a centrifugal force due to rotation also act thereon. Thus, the intermediate cylindrical portion requires rigidity so that the intermediate cylindrical portion is not deformed by the electromagnetic force or the gravitational force due to the own weight acting on the magnetic-pole pieces.

As a conventional rotation device that addresses such a problem, a rotation device including an intermediate cylindrical portion in which coupling members and magnetic-pole pieces arranged alternately in the circumferential direction are fastened in the axial direction using reinforcing rings, is provided. The reinforcing rings are joined by through bolts, together with the coupling members, to end plates disposed on the both ends of the intermediate cylindrical portion. In the rotation device, protruding portions that contact with the coupling members and the magnetic-pole pieces from the radially outer side are provided on the outer circumferential portions of the reinforcing rings. Since such protruding portions are provided, even if a radially outward centrifugal force acts on the coupling members and the magnetic-pole pieces, the centrifugal force can be transmitted to the end plates via the protruding portions provided on the reinforcing rings. As a result, the rigidity of the intermediate cylindrical portion can be enhanced (e.g., see Patent Document 1).

### CITATION LIST

### PATENT DOCUMENT

D1: US 2013/134815 A
D2: WO 2022/258948 A1 D3: CN 107 171 524 A Patent Document 1: Japanese Laid-Open Patent Publication No. 2010-17029

### SUMMARY OF THE INVENTION

### PROBLEM TO BE SOLVED BY THE INVENTION

However, in the conventional rotation device, when an electromagnetic force and a centrifugal force act on the intermediate cylindrical portion, a bending load acts on the through bolts for joining the reinforcing members and the coupling member. Thus, if a strong electromagnetic force and a strong centrifugal force act on the intermediate cylindrical portion, the intermediate cylindrical portion may be deformed by the bending load acting on the through bolts.

The present disclosure has been made to solve the above-described problem, and an object of the present disclosure is to provide a rotation device in which the rigidity of an intermediate cylindrical portion is improved.

### MEANS TO SOLVE THE PROBLEM

A rotation device according to the invention is claimed in claim 1.

### EFFECT OF THE INVENTION

In the rotation device according to the present disclosure, the reinforcing ring is disposed on the radially-inner side of the annular portion, and the outer circumferential surface of the reinforcing ring is fastened to the inner circumferential surfaces of the spacers. Therefore, the rigidity of the intermediate cylindrical portion can be improved.

### BRIEF DESCRIPTION OF THE DRAWINGS

[FIG. 1] FIG. 1 is a cross-sectional view of a rotation device according to embodiment 1, not according to the invention.
[FIG. 2] FIG. 2 is a cross-sectional view of the rotation device according to embodiment 1, not according to the invention.
[FIG. 3] FIG. 3 is an exploded perspective view of the rotation device according to embodiment 1, not according to the invention.
[FIG. 4] FIG. 4 is a cross-sectional view of a rotation device according to embodiment 2, not according to the invention.
[FIG. 5] FIG. 5 is a cross-sectional view of the rotation device according to embodiment 2, not according to the invention.
[FIG. 6] FIG. 6 is an exploded perspective view of the rotation device according to embodiment 2, not according to the invention.
[FIG. 7] FIG. 7 is a cross-sectional view of a rotation device according to embodiment 3, not according to the invention.
[FIG. 8] FIG. 8 is a cross-sectional view of a rotation device according to embodiment 4, not according to the invention.
[FIG. 9] FIG. 9 is a cross-sectional view of a rotation device according to embodiment 5, not according to the invention.
[FIG. 10] FIG. 10 is a cross-sectional view of a rotation device according to embodiment 6, according to the invention.
[FIG. 11] FIG. 11 is a perspective view of an intermediate cylindrical portion of a rotation device according to embodiment 7.

### DESCRIPTION OF EMBODIMENTS

Hereinafter, a rotation device according to embodiments for carrying out the present disclosure will be described in detail with reference to the drawings. The same or corresponding constituents in the drawings are denoted by the same reference characters.

### Embodiment 1, not according to the invention.

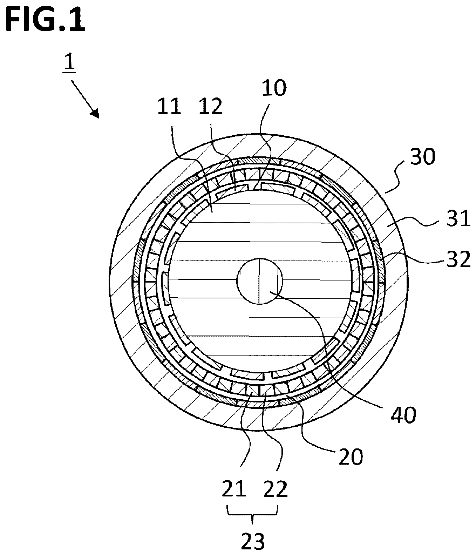

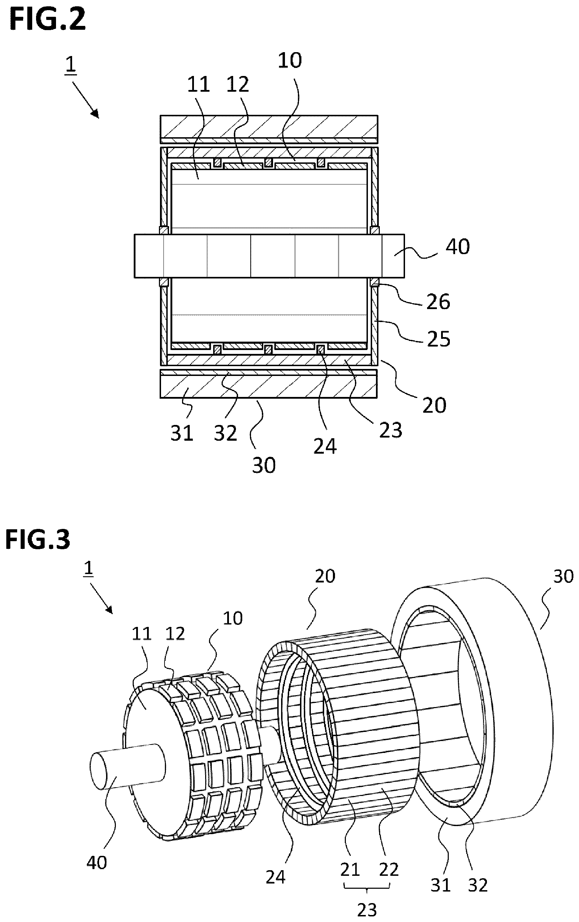

FIG. 1 and FIG. 2 are each a cross-sectional view of a rotation device according to embodiment 1. FIG. 1 is a cross-sectional view along a plane perpendicular to a rotary shaft of a rotation device 1. FIG. 2 is a cross-sectional view along a plane parallel to the rotary shaft of the rotation device 1. In the present embodiment, the rotation device 1 is a magnetic gear device. The rotation device 1 of the present embodiment includes an inner cylindrical portion 10, an intermediate cylindrical portion 20 disposed on the outer circumferential side of the inner cylindrical portion 10 with a gap therebetween, and an outer cylindrical portion 30 disposed on the outer circumferential side of the intermediate cylindrical portion 20 with a gap therebetween. The inner cylindrical portion 10, the intermediate cylindrical portion 20, and the outer cylindrical portion 30 are concentrically arranged around a rotary shaft 40. In FIG. 1 and FIG. 2, a case or the like for accommodating therein the inner cylindrical portion 10, the intermediate cylindrical portion 20, and the outer cylindrical portion 30 is not shown.

The rotary shaft 40 has a columnar shape. A direction parallel to the rotary shaft 40 is referred to as an axial direction, a direction perpendicular to the rotary shaft 40 is referred to as a radial direction, and a direction in which the rotary shaft rotates is referred to as a circumferential direction. In addition, a radially-inner side is in a direction toward the rotary shaft 40 in the radial direction, and a radially-outer side is in a direction away from the rotary shaft 40 in the radial direction.

The inner cylindrical portion 10 includes an inner cylindrical core 11, and inner cylindrical magnets 12 disposed on the outer circumferential surface of the inner cylindrical core 11 so as to be arranged in the circumferential direction. The inner cylindrical core 11 is fastened to the rotary shaft 40. The inner cylindrical magnets 12 are permanent magnets. In addition, the inner cylindrical magnets 12 are disposed such that S poles and N poles thereof are arranged alternately in the circumferential direction, and are divided in the axial direction. The inner cylindrical core 11 is composed of magnetic materials such as electromagnetic steel sheets stacked in the axial direction, for example.

The intermediate cylindrical portion 20 includes an annular portion 23 in which spacers 21 and magnetic-pole pieces 22 are arranged alternately in the circumferential direction, and reinforcing rings 24 for supporting the annular portion 23 from the inner circumferential surface of the annular portion 23. In addition, the intermediate cylindrical portion 20 includes end plates 25 at both ends in the axial direction. The annular portion 23 composed of the spacers 21 and the magnetic-pole pieces 22 is supported by the end plates 25 at the both ends in the axial direction. The end plates 25 are connected to the rotary shaft 40 via bearings 26. Each magnetic-pole piece 22 is composed of magnetic materials such as electromagnetic steel sheets stacked in the axial direction, for example. Each of the spacers 21, the reinforcing rings 24, and the end plate 25 is composed of a nonmagnetic material such as austenitic stainless steel, aluminum, or resin.

The outer cylindrical portion 30 includes an outer cylindrical core 31 having a cylindrical shape, and outer cylindrical magnets 32 disposed on the inner circumferential surface of the outer cylindrical core 31 so as to be arranged in the circumferential direction. The outer cylindrical magnets 32 are permanent magnets. In addition, the outer cylindrical magnets 32 are disposed such that S poles and N poles thereof are arranged alternately in the circumferential direction. The outer cylindrical core 31 is composed of magnetic materials such as electromagnetic steel sheets stacked in the axial direction, for example.

FIG. 3 is an exploded perspective view of the rotation device 1 of the present embodiment. In FIG. 3, the bearings 26 and the end plates 25 of the intermediate cylindrical portion 20 are not shown. In the rotation device 1 of the present embodiment, the inner cylindrical magnets 12 are divided as fourteen pieces in the circumferential direction and four pieces in the axial direction. However, the inner cylindrical magnets 12 need not necessarily be divided in the axial direction. In addition, in the annular portion 23 of the intermediate cylindrical portion 20, the twenty-four magnetic-pole pieces 22 divided in the circumferential direction, and the spacers 21 composed of continuous bodies along the rotary shaft are arranged alternately in the circumferential direction. Three reinforcing rings 24 are disposed on the radially-inner side of the annular portion 23. Further, the outer cylindrical magnets 32 are divided as eighteen pieces in the circumferential direction.

The rotation device 1 of the present embodiment is a magnetic gear device. Thus, the intermediate cylindrical portion 20 is a stator, and the inner cylindrical portion 10 and the outer cylindrical portion 30 are rotors. Therefore, the inner cylindrical portion 10 rotates together with the rotary shaft 40. The outer cylindrical portion 30 and the inner cylindrical portion 10 rotate relative to each other. The intermediate cylindrical portion 20 is fixed to the case or the like via the end plates 25. Although not shown, the outer cylindrical portion 30 is rotatably supported relative to the rotary shaft 40 via bearings. For example, when the inner cylindrical portion 10 is rotated by external motive power, an attractive force and a repulsive force act between the inner cylindrical magnets 12 and the outer cylindrical magnets 32, via the magnetic-pole pieces 22 of the intermediate cylindrical portion 20. The rotation torque of the inner cylindrical portion 10 is transmitted to the rotation torque of the outer cylindrical portion 30 by the attractive force and the repulsive force acting between the inner cylindrical magnets 12 and the outer cylindrical magnets 32.

In the magnetic gear device, when the inner cylindrical portion 10 and the outer cylindrical portion 30 are rotating, an electromagnetic force acts in the radial direction on the intermediate cylindrical portion 20 by magnetic forces of the inner cylindrical magnets 12 and the outer cylindrical magnets 32. In addition, in a case where the magnetic gear device is used as a speed increasing gear of a wind power generation device, the outer diameter of the intermediate cylindrical portion 20 is 10 m or more, and the thickness in the radial direction of the annular portion 23 is about 40 mm. Thus, in the intermediate cylindrical portion 20, the effect of a gravitational force due to the own weight can also no longer be ignored. As a result, the intermediate cylindrical portion 20 may be deformed by the electromagnetic force and the gravitational force. Specifically, the both ends in the axial direction of the intermediate cylindrical portion 20 are fixed by the end plates and thus are less susceptible to deformation, but the center part in the axial direction of the intermediate cylindrical portion 20 is susceptible to radial deformation.

In the rotation device of the present embodiment, as shown in FIG. 2 and FIG. 3, the reinforcing rings 24 are disposed on the radially-inner side of the annular portion 23, and the outer circumferential surfaces of the reinforcing rings 24 are fastened to the inner circumferential surfaces of the spacers 21 arranged between the magnetic-pole pieces 22. That is, the inner circumferential surfaces of the spacers 21 which are provided with the magnetic-pole pieces 22 arranged on the both sides in the circumferential direction of each spacer 21 are fastened to the outer circumferential surfaces of the reinforcing rings 24. In the intermediate cylindrical portion configured as described above, even if an electromagnetic force and a gravitational force act in the radial direction on the reinforcing rings 24, circumferential stress occurring in the reinforcing rings 24 is reduced, so that the rigidity of the intermediate cylindrical portion can be improved.

Here, each spacer 21 is configured as a continuous body formed to be integral and jointless from the end plate 25 at one end to the end plate 25 at the other end in the axial direction. That is, the spacer 21 is composed of a continuous body along the rotary shaft. The spacer 21 configured as described above has a high rigidity, as compared to a spacer divided along the axial direction and having a joint, so that the rigidity of the intermediate cylindrical portion is improved.

With respect to the thickness in the radial direction of each spacer 21, the thickness of a part, of the spacer 21, to be fastened to the reinforcing ring 24 may be thicker than that of the other parts of the spacer 21. This reduces stress occurring in fastening parts between the spacers and the reinforcing rings, so that the rigidity of the intermediate cylindrical portion can be improved.

As a fastening method for the spacers 21 and the reinforcing rings 24, a fastening method in which a radially outward load acting in the spacers 21 can be transmitted to the reinforcing rings 24 is used. As the fastening method, for example, a mechanically fastening method such as bolt fastening, riveting, or caulking, a material fastening method such as welding, pressure welding, friction welding, or solid-state bonding, or a chemical fastening method such as bonding or deposition can be used. The spacers 21 and the reinforcing rings 24 may be an integrated structure.

Here, the relationship between a radial-direction displacement δ and an internal pressure P, when the internal pressure P has been applied to a cylinder in which a thickness in the radial direction is represented by t, an average radius is represented by r, and the modulus of longitudinal elasticity of material is represented by E, will be described. The average radius refers to an average of the radius of the innermost circumferential surface and the radius of the outermost circumferential surface of the cylinder. The relationship between δ and P in the cylinder is represented by the following formula (1). $δ = \left(P\times {r}^{2}\right) / \left(t\times E\right)$

As represented in formula (1), the radial-direction displacement δ is proportional to the square of the average radius r. In a case where a radially outward load acting on the intermediate cylindrical portion is assumed to correspond to an internal pressure acting on the intermediate cylindrical portion, it is found that, if the thickness in the radial direction of the reinforcing ring is constant, the smaller the average radius of each reinforcing ring is, the smaller the radial-direction displacement becomes. In the rotation device of the present embodiment, the reinforcing rings 24 are fastened to the inner circumferential surfaces of the spacers 21, whereby the average radius of each reinforcing ring 24 can be reduced. Thus, the displacement of the reinforcing rings 24 is reduced, so that the rigidity of the intermediate cylindrical portion can be improved. In addition, as represented in formula (1), when the radius of the innermost circumferential surface of the reinforcing ring 24 is further reduced, the average radius is further reduced, so that the rigidity of the intermediate cylindrical portion can be further improved.

As a rotation device of a comparative example for the rotation device of the present embodiment, a rotation device including an intermediate cylindrical portion in which an annular portion divided into a plurality of pieces in the axial direction is fastened in the axial direction using a reinforcing ring is considered. In the rotation device of the comparative example, the annular portion is fastened to the reinforcing ring by bolts or the like along the axial direction. In a case of the rotation device of the comparative example, an electromagnetic force acting on the intermediate cylindrical portion acts in a direction crossing the bolt fastening direction. Thus, a bending load acts in the fastening part. That is, in the intermediate cylindrical portion of the rotation device of the comparative example, a direction in which a fastening force acts in the fastening part and a direction in which the load acts cross each other. As a result, in the rotation device of the comparative example, the fastening force of the fastening part is weak as a resistance to the load.

Meanwhile, in the rotation device of the present embodiment, the annular portion is fastened to the reinforcing rings along the radial direction. Thus, an electromagnetic force acting on the intermediate cylindrical portion acts in a direction parallel to the fastening direction. Accordingly, a tensile load acts in the fastening part. That is, in the intermediate cylindrical portion of the rotation device of the present embodiment, a direction in which a fastening force acts in the fastening part and a direction in which the load acts are parallel to each other. As a result, in the rotation device of the present embodiment, the fastening force in the fastening part directly acts as a resistance to the load, so that the rigidity of the intermediate cylindrical portion can be improved. In particular, a high-strength fastening method such as bolt fastening which exerts a fastening force in the axial direction is effective.

It is preferable that the both ends in the axial direction of each spacer are fastened to the end plates while a tensile force in the axial direction is applied thereon. For example, in the annular portion in which the spacers and the magnetic-pole pieces are arranged alternately in the circumferential direction, the entire length in the axial-direction of each magnetic-pole piece, before attaching the end plates, is made longer than the entire length in the axial direction of each spacer such that the difference in length falls within the elastic deformation range of the spacer. Then, the end plates are fastened to the spacers while the magnetic-pole pieces are compressed using the end plates from the both ends in the axial direction. The fastening method for the end plates and the spacers is, for example, bolt fastening, welding, or the like. In the intermediate cylindrical portion assembled as described above, a compressive force in the axial direction acts on the magnetic-pole pieces, and the tensile force in the axial direction acts on the spacers. In the intermediate cylindrical portion configured as described above, even in a case of each magnetic-pole piece in which electromagnetic steel sheets are stacked, the stacked structure with the electromagnetic steel sheets can be maintained without employing a special structure for retaining the stacked structure.

As shown in FIG. 2, the ends on the radially-inner side of the reinforcing rings 24 of the intermediate cylindrical portion 20 are preferably on a radially-inner side relative to the ends on the radially-outer side of the inner cylindrical magnets 12 of the inner cylindrical portion 10. This configuration reduces gaps between the inner cylindrical magnets 12 of the inner cylindrical portion 10 and the magnetic-pole pieces 22 of the intermediate cylindrical portion 20, so that the rigidity of the reinforcing ring 24 is enhanced, and also, reduction in torque conversion efficiency can be prevented.

In the rotation device of the present embodiment, the inner cylindrical portion as a rotor is fastened to the rotary shaft. As a configuration different from this, the intermediate cylindrical portion as a stator may be fastened to the rotary shaft, and the inner cylindrical portion and the outer cylindrical portion as rotors may be rotatably supported with respect to the rotary shaft via bearings. In this case, the rotary shaft remains fixed and does not rotate. In the rotation device of the present embodiment, the intermediate cylindrical portion 20 includes the three reinforcing rings 24, but only needs to include one or more reinforcing rings 24.

### Embodiment 2, no t according to the invention.

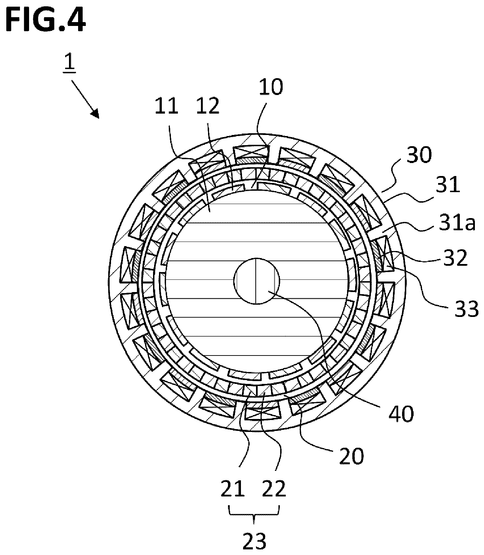

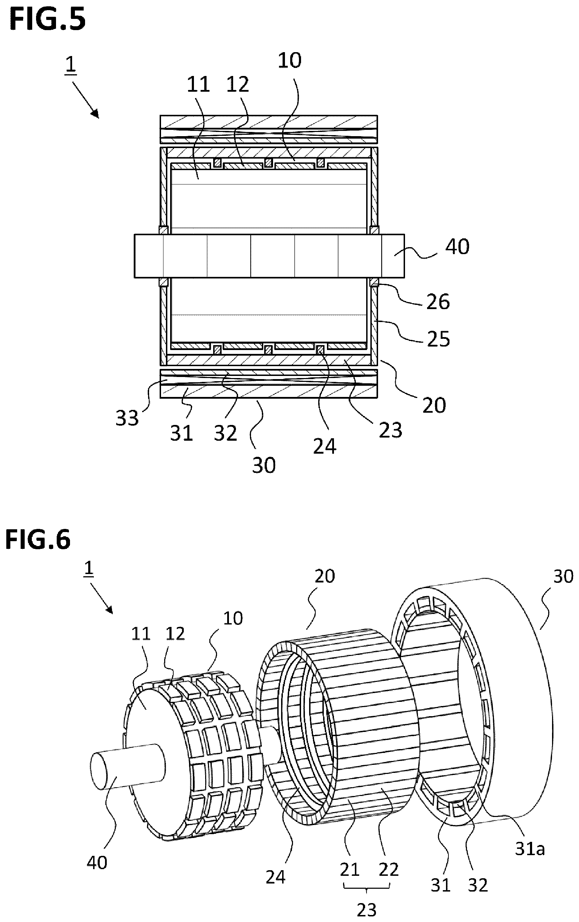

FIG. 4 and FIG. 5 are each a cross-sectional view of a rotation device according to embodiment 2. FIG. 4 is a cross-sectional view along a plane perpendicular to the rotary shaft of the rotation device 1. FIG. 5 is a cross-sectional view along a plane parallel to the rotary shaft of the rotation device. In the present embodiment, the rotation device 1 is a magnetic-geared rotary electric machine. The rotation device 1 of the present embodiment includes the inner cylindrical portion 10, the intermediate cylindrical portion 20 disposed on the outer circumferential side of the inner cylindrical portion 10 with a gap therebetween, and the outer cylindrical portion 30 disposed on the outer circumferential side of the intermediate cylindrical portion 20 with a gap therebetween. The inner cylindrical portion 10, the intermediate cylindrical portion 20, and the outer cylindrical portion 30 are concentrically arranged around the rotary shaft 40. In FIG. 4 and FIG. 5, a case or the like for accommodating therein the inner cylindrical portion 10, the intermediate cylindrical portion 20, and the outer cylindrical portion 30 is not shown.

The configurations of the inner cylindrical portion 10 and the intermediate cylindrical portion 20 are the same as those of the rotation device of embodiment 1. The outer cylindrical portion 30 includes the outer cylindrical core 31 having a cylindrical shape, the outer cylindrical magnets 32, and outer cylindrical coils 33. The outer cylindrical core 31 includes a plurality of teeth 31a protruding from a cylindrical core back to the radially-inner side. Slots are formed between the plurality of teeth 31a. The outer cylindrical coils 33 are wound around the teeth 31a making use of the slots. The outer cylindrical magnets 32 are disposed in the slots and are on the radially-inner side relative to the outer cylindrical coils 33.

FIG. 6 is an exploded perspective view of the rotation device 1 of the present embodiment. In FIG. 6, the bearings 26 and the end plates 25 of the intermediate cylindrical portion 20 are not shown. In addition, in order to avoid complication, the outer cylindrical coils 33 are also not shown in FIG. 6. In the rotation device 1 of the present embodiment, the inner cylindrical magnets 12 are divided as fourteen pieces in the circumferential direction and four pieces in the axial direction. In addition, in the annular portion 23 of the intermediate cylindrical portion 20, the twenty-four magnetic-pole pieces 22 divided in the circumferential direction, and the spacers 21 composed of continuous bodies along the rotary shaft are arranged alternately in the circumferential direction. The three reinforcing rings 24 are disposed on the inner circumferential side of the annular portion 23. Further, eighteen outer cylindrical magnets 32 and eighteen outer cylindrical coils 33 are arranged in the circumferential direction.

The rotation device 1 of the present embodiment is a magnetic-geared rotary electric machine. Thus, the outer cylindrical portion 30 is a stator, the inner cylindrical portion 10 is a high-speed rotor, and the intermediate cylindrical portion 20 is a low-speed rotor. Therefore, the inner cylindrical portion 10 rotates together with the rotary shaft 40. The intermediate cylindrical portion 20 is rotatably supported with respect to the rotary shaft 40 via the bearings 26. Although not shown, the outer cylindrical portion 30 is fixed to the case. For example, when the intermediate cylindrical portion 20 is rotated by external motive power, an attractive force and a repulsive force act between the inner cylindrical magnets 12 and the outer cylindrical magnets 32 via the magnetic-pole pieces 22 of the intermediate cylindrical portion 20. The rotation torque of the intermediate cylindrical portion 20 is transmitted to the rotation torque of the inner cylindrical portion 10 by the attractive force and the repulsive force acting between the inner cylindrical magnets 12 and the outer cylindrical magnets 32.

In the magnetic-geared rotary electric machine, when the intermediate cylindrical portion 20 is rotating, an electromagnetic force acts in the radial direction on the intermediate cylindrical portion 20 by the magnetic forces of the inner cylindrical magnets 12 and the outer cylindrical magnets 32. In addition, a centrifugal force also acts on the intermediate cylindrical portion 20. Further, in a case where the intermediate cylindrical portion 20 is large in size, the effect of a gravitational force due to the own weight can also no longer be ignored. As a result, the intermediate cylindrical portion 20 may be deformed by the electromagnetic force, the centrifugal force, or the gravitational force. Specifically, the both ends in the axial direction of the intermediate cylindrical portion 20 are fixed by the end plates and thus are less susceptible to deformation, but the center part in the axial direction of the intermediate cylindrical portion 20 is susceptible to radial deformation.

In the rotation device of the present embodiment, as shown in FIG. 5 and FIG. 6, the reinforcing rings 24 are disposed on the radially-inner side of the annular portion 23, and the outer circumferential surfaces of the reinforcing rings 24 are fastened to the inner circumferential surfaces of the spacers 21 arranged between the magnetic-pole pieces 22. That is, the inner circumferential surfaces of the spacers 21 which are provided with the magnetic-pole pieces 22 arranged on the both sides in the circumferential direction of each spacer 21 are fastened to the outer circumferential surfaces of the reinforcing rings 24. In the intermediate cylindrical portion configured as described above, even if an electromagnetic force, a centrifugal force, and a gravitational force act in the radial direction on each reinforcing ring 24, circumferential stress occurring in the reinforcing ring 24 is reduced, so that the rigidity of the intermediate cylindrical portion can be improved.

In the rotation device of the present embodiment, as in embodiment 1, the reinforcing rings 24 are fastened to the inner circumferential surfaces of the spacers 21, whereby the average radius of each reinforcing ring 24 can be reduced. Thus, displacement of the reinforcing ring 24 decreases, so that the rigidity of the intermediate cylindrical portion can be improved.

In addition, in the rotation device of the present embodiment, as in embodiment 1, the annular portion is fastened to the reinforcing rings along the radial direction. Thus, an electromagnetic force, a centrifugal force, and a gravitational force acting on the intermediate cylindrical portion act in a direction parallel to the fastening direction. Accordingly, tensile load acts on the fastening part. That is, in the intermediate cylindrical portion of the rotation device of the present embodiment, a direction in which a fastening force acts in the fastening part and a direction in which the load acts are parallel to each other. As a result, in the rotation device of the present embodiment, the fastening force in the fastening part directly acts as a resistance to the load, so that the rigidity of the intermediate cylindrical portion can be improved.

As shown in FIG. 5, the ends on the radially-inner side of the reinforcing rings 24 of the intermediate cylindrical portion 20 are preferably on the radially-inner side relative to the ends on the radially-outer side of the inner cylindrical magnets 12 of the inner cylindrical portion 10. This configuration reduces gaps between the inner cylindrical magnets 12 of the inner cylindrical portion 10 and the magnetic-pole pieces 22 of the intermediate cylindrical portion 20, so that the rigidity of the reinforcing ring 24 is enhanced, and also, reduction in rotation conversion efficiency can be prevented. In the rotation device of the present embodiment, the intermediate cylindrical portion 20 includes the three reinforcing rings 24, but only needs to include one or more reinforcing rings 24.

### Embodiment 3, not according to the invention.

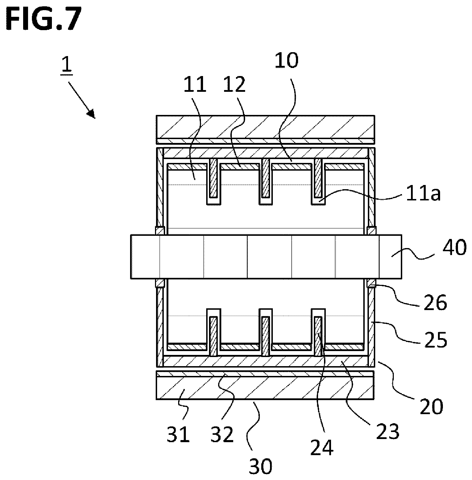

FIG. 7 is a cross-sectional view of a rotation device according to embodiment 3. FIG. 7 is a cross-sectional view along a plane parallel to the rotary shaft of the rotation device. The rotation device 1 of the present embodiment will be described as a magnetic gear device. Thus, the basic configuration of the rotation device of the present embodiment is the same as that of the rotation device of embodiment 1.

As shown in FIG. 7, in the rotation device 1 of the present embodiment, cutouts 11a are formed over the entire circumference of the inner cylindrical core 11 of the inner cylindrical portion 10. The cutouts 11a are formed at the positions facing the reinforcing rings 24 of the intermediate cylindrical portion 20. In addition, the inner cylindrical magnets 12 are divided as four pieces in the axial direction so as to correspond to the cutouts 11a. The reinforcing rings 24 are disposed so as to be spaced from the inner walls of the cutouts 11a. Thus, the ends on the radially-inner side of the reinforcing rings 24 of the intermediate cylindrical portion 20 can be on the radially-inner side relative to the end on the radially-outer side of the inner cylindrical core 11. As a result, the average radius of each reinforcing ring 24 can be further reduced, so that the rigidity of the intermediate cylindrical portion can be improved.

In addition, in the rotation device configured as described above, the width in the radial direction of each reinforcing ring 24 can be further increased, and thus the rigidity of the reinforcing ring 24 itself can be further enhanced, so that the rigidity of the intermediate cylindrical portion 20 can be further improved.

In the rotation device of the present embodiment, the intermediate cylindrical portion 20 includes the three reinforcing rings 24, but only needs to include one or more reinforcing rings 24. Although the rotation device of the present embodiment has been described as a magnetic gear device, a similar effect can be obtained even if the rotation device is a magnetic-geared rotary electric machine.

### Embodiment 4, not according to the invention.

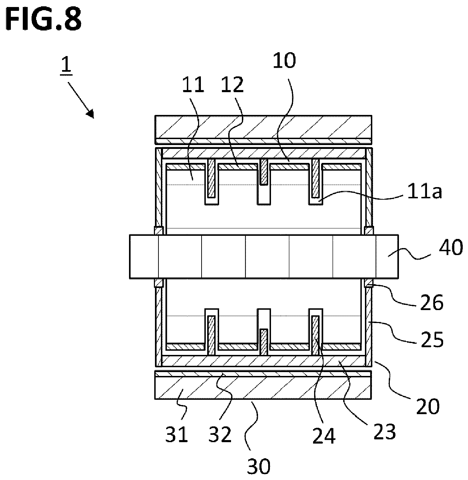

FIG. 8 is a cross-sectional view of a rotation device according to embodiment 4. FIG. 8 is a cross-sectional view along a plane parallel to the rotary shaft of the rotation device. The basic configuration of the rotation device of the present embodiment is the same as that of the rotation device of embodiment 3.

As shown in FIG. 8, in the rotation device 1 of the present embodiment, the cutouts 11a are formed over the entire circumference of the inner cylindrical core 11 of the inner cylindrical portion 10. The cutouts 11a are formed at the positions facing the reinforcing rings 24 of the intermediate cylindrical portion 20. In addition, the inner cylindrical magnets 12 are divided as four pieces in the axial direction so as to correspond to the cutouts 11a. The reinforcing rings 24 are disposed so as to be spaced from the inner walls of the cutouts 11a. Thus, the ends on the radially-inner side of the reinforcing rings 24 of the intermediate cylindrical portion 20 can be on the radially-inner side relative to the end on the radially-outer side of the inner cylindrical core 11. As a result, the average radius of each reinforcing ring 24 can be further reduced, so that the rigidity of the intermediate cylindrical portion can be improved.

In the rotation device 1 of the present embodiment, the intermediate cylindrical portion 20 includes the three reinforcing rings 24. The width in the radial direction of the reinforcing ring 24 located on the center side in the axial direction is smaller than the width in the radial direction of the reinforcing ring 24 located on each end side in the axial direction. Thus, mass distribution is greater on each end side than on the center side in the axial direction of the intermediate cylindrical portion 20.

The both ends in the axial direction of the intermediate cylindrical portion 20 are fixed by the end plates 25. Thus, deformation of the intermediate cylindrical portion 20 due to a gravitational force becomes greater at the center part in the axial direction. In the rotation device of the present embodiment, mass distribution is smaller on the center part side than on each end side in the axial direction of the intermediate cylindrical portion 20, and thus deformation of the center part of the intermediate cylindrical portion 20 due to a gravitational force can be decreased.

In the rotation device of the present embodiment, the intermediate cylindrical portion 20 includes the three reinforcing rings 24, but may include four or more reinforcing rings 24. Although the rotation device of the present embodiment has been described as a magnetic gear device, a similar effect can be obtained even if the rotation device is a magnetic-geared rotary electric machine.

### Embodiment 5, not according to the invention

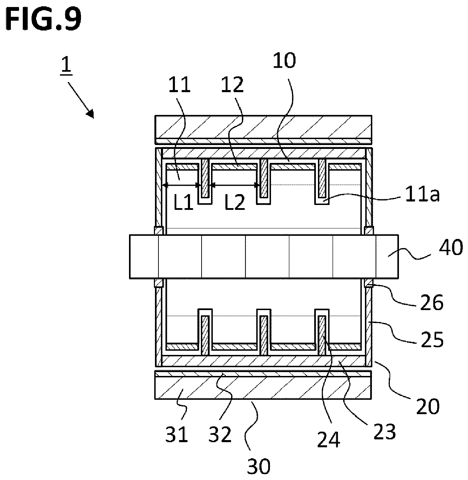

FIG. 9 is a cross-sectional view of a rotation device according to embodiment 5. FIG. 9 is a cross-sectional view along a plane parallel to the rotary shaft of the rotation device. The basic configuration of the rotation device of the present embodiment is the same as that of the rotation device of embodiment 3.

As shown in FIG. 9, in the rotation device 1 of the present embodiment, the cutouts 11a are formed over the entire circumference of the inner cylindrical core 11 of the inner cylindrical portion 10. The cutouts 11a are formed at the positions facing the reinforcing rings 24 of the intermediate cylindrical portion 20. In addition, the inner cylindrical magnets 12 are divided as four pieces in the axial direction so as to correspond to the cutouts 11a. The reinforcing rings 24 are disposed so as to be spaced from the inner walls of the cutouts 11a. Thus, the ends on the radially-inner side of the reinforcing rings 24 of the intermediate cylindrical portion 20 can be on the radially-inner side relative to the end on the radially-outer side of the inner cylindrical core 11. As a result, the average radius of each reinforcing ring 24 can be further reduced, so that the rigidity of the intermediate cylindrical portion can be improved.

In the rotation device 1 of the present embodiment, the intermediate cylindrical portion 20 includes the three reinforcing rings 24. When the distance between the end plate 25 and the reinforcing ring 24 on each end side in the axial direction is defined as L1, and the distance between the reinforcing rings 24 on the center side in the axial direction is defined as L2, L1 is smaller than L2. In addition, the widths in the radial direction of the three reinforcing rings 24 are equal to each other. Thus, mass distribution is greater on each end side than on the center side in the axial direction of the intermediate cylindrical portion 20.

The both ends in the axial direction of the annular portion 23 of the intermediate cylindrical portion 20 are fixed by the end plates 25. Thus, deformation of the intermediate cylindrical portion 20 due to a gravitational force becomes greater at the center part in the axial direction. In the rotation device of the present embodiment, mass distribution is smaller on the center part side than on each end side in the axial direction of the intermediate cylindrical portion 20, and thus deformation of the center part of the intermediate cylindrical portion 20 due to a gravitational force can be decreased.

Since L1 is smaller than L2, a load acting on the joining part between each end plate 25 and the annular portion 23 can be reduced, due to the mass of the annular portion 23. As a result, the strength reliability of the intermediate cylindrical portion 20 can be improved.

In the rotation device of the present embodiment, the intermediate cylindrical portion 20 includes the three reinforcing rings 24, but only needs to include two or more reinforcing rings 24. Although the rotation device of the present embodiment has been described as a magnetic gear device, a similar effect can be obtained even if the rotation device is a magnetic-geared rotary electric machine.

### Embodiment 6, according to the invention.

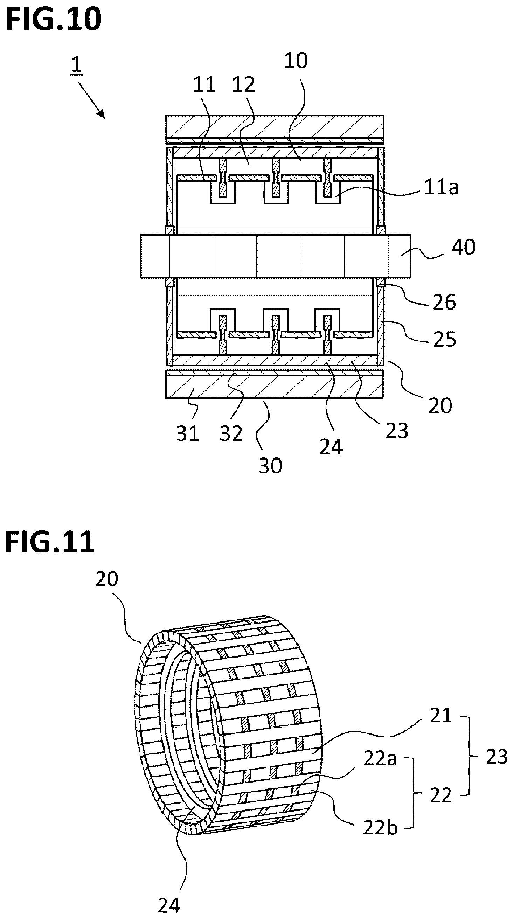

FIG. 10 is a cross-sectional view of a rotation device according to embodiment 6. FIG. 10 is a cross-sectional view along a plane parallel to the rotary shaft of the rotation device. The basic configuration of the rotation device of the present embodiment is the same as that of the rotation device of embodiment 3.

As shown in FIG. 10, in the rotation device 1 of the present embodiment, the cutouts 11a are formed over the entire circumference of the inner cylindrical core 11 of the inner cylindrical portion 10. The cutouts 11a are formed at the positions facing the reinforcing rings 24 of the intermediate cylindrical portion 20. In addition, the inner cylindrical magnets 12 are divided as the four pieces in the axial direction so as to correspond to the cutouts 11a. The reinforcing rings 24 are disposed so as to be spaced from the inner walls of the cutouts 11a. Thus, the ends on the radially-inner side of the reinforcing rings 24 of the intermediate cylindrical portion 20 can be on the radially-inner side relative to the end on the radially-outer side of the inner cylindrical core 11. As a result, the average radius of each reinforcing ring 24 can be further reduced, so that the rigidity of the intermediate cylindrical portion can be improved.

In the rotation device 1 of the present embodiment, the widths in the axial direction of the cutouts 11a are set to be sufficiently large such that the reinforcing rings 24 do not come into contact with the inner cylindrical core 11. However, in a case where the widths in the axial direction of the inner cylindrical magnets 12 are reduced so as to correspond to the widths of the cutouts 11a, torque transmission efficiency as the magnetic gear device is reduced.

In the rotation device 1 of the present embodiment, the widths in the axial direction of gaps between the inner cylindrical magnets 12 are smaller than the widths of the cutouts 11a. The thickness in the axial direction of each reinforcing ring 24 is set to be the smallest at the position at which the reinforcing ring 24 faces the inner cylindrical magnets 12 in the axial direction.

In the rotation device configured as described above, gaps in the axial direction between the reinforcing rings 24 and the inner cylindrical core 11, and gaps in the axial direction between the reinforcing rings 24 and the inner cylindrical magnets 12 can be increased, and thus the reinforcing rings 24 and the inner cylindrical portion 10 can be prevented from coming into contact with each other. In addition, since the widths in the axial direction of the inner cylindrical magnets 12 need not be reduced, reduction in torque transmission efficiency as a magnetic gear device can be prevented.

In the rotation device of the present embodiment, the intermediate cylindrical portion 20 includes the three reinforcing rings 24, but only needs to include one or more reinforcing rings 24. Although the rotation device of the present embodiment has been described as a magnetic gear device, a similar effect can be obtained even if the rotation device is a magnetic-geared rotary electric machine.

In each of the rotation devices of embodiments 3 to 6, the cutouts are formed in the inner cylindrical core, whereby the ends on the radially-inner side of the reinforcing rings are on the radially-inner side relative to the end on the radially-outer side of the inner cylindrical core. As another configuration, instead of forming the cutouts in the inner cylindrical core, the inner cylindrical core may be a segmented core composed of a plurality of segments in the axial direction.

### Embodiment 7

FIG. 11 is a perspective view of the intermediate cylindrical portion of a rotation device according to embodiment 7. The basic configuration of the rotation device of the present embodiment is the same as that of the rotation device of embodiments 1 to 6. In FIG. 11, the bearings and the end plates of the intermediate cylindrical portion 20 are not shown. The intermediate cylindrical portion 20 of the present embodiment includes the annular portion 23 in which the spacers 21 and the magnetic-pole pieces 22 are arranged alternately in the circumferential direction, and the reinforcing rings 24 for supporting the annular portion 23 from the inner circumferential surface.

As shown in FIG. 11, in the intermediate cylindrical portion 20 of the present embodiment, the magnetic-pole pieces 22 include nonmagnetic blocks 22a and segmented magnetic-pole pieces 22b. The nonmagnetic blocks 22a are located where the reinforcing rings 24 face the magnetic-pole pieces 22. That is, the magnetic-pole pieces 22 include the nonmagnetic blocks 22a, and the segmented magnetic-pole pieces 22b divided in the axial direction with the nonmagnetic block 22a therebetween. As the material of the nonmagnetic blocks 22a, a material with a lower density than that of the segmented magnetic-pole pieces 22b is applied. The material of the nonmagnetic block 22a is, for example, a nonmagnetic material such as stainless steel or resin. Each segmented magnetic-pole piece 22b is, for example, stacked electromagnetic steel sheets.

The nonmagnetic blocks 22a may be fastened to the reinforcing rings 24 by bolt fastening, welding, or the like. Alternatively, the nonmagnetic blocks 22a may be integrated with the reinforcing rings 24. Since the reinforcing rings 24 are fastened to the spacers 21, the nonmagnetic blocks 22a are not fastened to the reinforcing rings 24, and may be retained so as to be fitted to the spacers 21 or the segmented magnetic-pole pieces 22b, or the spacers 21 and the segmented magnetic-pole pieces 22b.

In the rotation device configured as described above, since, as the material of the nonmagnetic blocks 22a, the material with a lower density than that of the segmented magnetic-pole pieces 22b is applied, the intermediate cylindrical portion can be reduced in weight, as compared to the rotation devices of embodiments 1 to 6. As a result, a centrifugal force, a gravitational force, or the like acting on the intermediate cylindrical portion can be reduced. In the rotation device of the present embodiment, since each magnetic-pole piece 22 is partially composed of a nonmagnetic material, the proportion of a magnetic material in the magnetic-pole piece 22 decreases. However, the nonmagnetic materials are located at the positions facing the reinforcing rings, and the magnetic materials are located at the positions facing the inner cylindrical magnets. That is, in the intermediate cylindrical portion, the magnetic materials must be present at the positions facing the inner cylindrical magnets. Thus, in the rotation device of the present embodiment, torque transmission efficiency is not reduced.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure as claimed in the appended claims. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

- 1: rotation device
- 10: inner cylindrical portion
- 11: inner cylindrical core
- 11a: cutout
- 12: inner cylindrical magnet
- 20: intermediate cylindrical portion
- 21: spacer
- 22: magnetic-pole piece
- 22a: nonmagnetic block
- 22b: segmented magnetic-pole piece
- 23: annular portion
- 24: reinforcing ring
- 25: end plate
- 26: bearing
- 30: outer cylindrical portion
- 31: outer cylindrical core
- 31a: tooth
- 32: outer cylindrical magnet
- 33: outer cylindrical coil
- 40: rotary shaft

## Claims

1. A rotation device (1) comprising an inner cylindrical portion (10), an intermediate cylindrical portion (20), and an outer cylindrical portion (30) which are concentrically arranged around a rotary shaft (40, wherein
the intermediate cylindrical portion (20) includes an annular portion (23) in which magnetic-pole pieces (22), and spacers (21) composed of continuous bodies along the rotary shaft (40) are arranged alternately in a circumferential direction, and a reinforcing ring (24) for supporting the annular portion (23),
the reinforcing ring (24) is disposed on a radially-inner side of the annular portion (23),
an outer circumferential surface of the reinforcing ring (24) is fastened to inner circumferential surfaces of the spacers (20),
the inner cylindrical portion (10) includes an inner cylindrical core (11) having a cylindrical shape, and a plurality of inner cylindrical magnets (12) disposed on an outer circumferential surface of the inner cylindrical core (11) so as to be arranged in the circumferential direction, and
the plurality of inner cylindrical magnets (12) are each divided into a plurality of pieces in an axial direction, wherein
an end on a radially-inner side of the reinforcing ring (24) is on the radially-inner side relative to an end on a radially-outer side of the inner cylindrical core (11), or
an end on a radially-inner side of the reinforcing ring (24) is on the radially-inner side relative to ends on a radially-outer side of the inner cylindrical magnets (12), and
a thickness in the axial direction of the reinforcing ring (24) is the smallest at a position at which the reinforcing ring (24) faces the inner cylindrical magnets (12) in the axial direction.

2. The rotation device (1) according to claim 1,
wherein
the intermediate cylindrical portion (20) includes two or more said reinforcing rings (24),
end plates (25) are respectively disposed at both ends in the axial direction of the intermediate cylindrical portion (20), and
a distance in the axial direction between the end plate (25) and the reinforcing ring (24) which is closest to the end plate is smaller than a distance in the axial direction between two of the reinforcing rings (24) located on a center side in the axial direction.

3. The rotation device (1) according to claim 1 or **2,** wherein
the intermediate cylindrical portion (20) includes three or more said reinforcing rings (24), and
a width in a radial direction of the reinforcing ring (24) located on the center side in the axial direction is smaller than a width in the radial direction of the reinforcing ring (24) located on each end side in the axial direction.

4. The rotation device (1) according to any one of claims 1 to 3, wherein
the magnetic-pole pieces (22) of the intermediate cylindrical portion (20) include nonmagnetic blocks (22a) located at positions facing the outer circumferential surface of the reinforcing ring (24), and a plurality of segmented magnetic-pole pieces (22b) divided in the axial direction with the nonmagnetic blocks (22a) therebetween.

5. The rotation device (1) according to any one of claims 1 to 4, wherein
the outer cylindrical portion (30) includes a magnet (32) and an outer cylindrical core (31) composed of a magnetic material.

6. The rotation device (1) according to any one of claims 1 to 5, wherein
the intermediate cylindrical portion (20) is a stator,
the outer cylindrical portion (30) and the inner cylindrical portion (10) are rotors which rotate relative to each other, and
the rotation device (1) operates as a magnetic gear device.

7. The rotation device (1) according to any one of claims 1 to 5, wherein
the outer cylindrical portion (30) includes a coil (33),
the outer cylindrical portion (30) is a stator,
the intermediate cylindrical portion (20) is a low-speed rotor,
the inner cylindrical portion (10) is a high-speed rotor, and
the rotation device (1) operates as a magnetic-geared rotary electric machine.

## Patentansprüche

1. Rotationsvorrichtung (1), umfassend einen inneren zylindrischen Abschnitt (10), einen mittleren zylindrischen Abschnitt (20) und einen äußeren zylindrischen Abschnitt (30), die konzentrisch um eine Drehwelle (40) angeordnet sind, wobei
der mittlere zylindrische Abschnitt (20) einen ringförmigen Abschnitt (23), in dem Magnetpolteile (22) und Abstandshalter (21), die aus kontinuierlichen Körpern entlang der Drehwelle (40) zusammengesetzt sind, abwechselnd in Umfangsrichtung angeordnet sind, und einen Verstärkungsring (24) zum Halten des ringförmigen Abschnitts (23) umfasst,
wobei der Verstärkungsring (24) auf einer radial inneren Seite des ringförmigen Abschnitts (23) angeordnet ist,
wobei eine Außenumfangsfläche des Verstärkungsrings (24) an Innenumfangsflächen der Abstandshalter (20) befestigt ist,
wobei der innere zylindrische Abschnitt (10) einen Innenzylinderkern (11) mit zylindrischer Form und eine Vielzahl von Innenzylindermagneten (12), die auf einer Außenumfangsfläche des Innenzylinderkerns (11) angeordnet sind, um in Umfangsrichtung angeordnet zu sein, umfasst, und
wobei die Vielzahl von Innenzylindermagneten (12) jeweils in Axialrichtung in eine Vielzahl von Teilen unterteilt sind, wobei
ein Ende auf einer radial inneren Seite des Verstärkungsrings (24) auf der radial inneren Seite relativ zu einem Ende auf der radial äußeren Seite des Innenzylinderkerns (11) ist, oder
wobei ein Ende auf einer radial inneren Seite des Verstärkungsrings (24) auf der radial inneren Seite relativ zu Enden auf einer radial äußeren Seite der Innenzylindermagneten (12) ist, und
eine Dicke in der Axialrichtung des Verstärkungsrings (24) in einer Position, in welcher der Verstärkungsring (24) den Innenzylindermagneten (12) in der Axialrichtung zugewandt ist, am kleinsten ist.

2. Rotationsvorrichtung (1) nach Anspruch 1, wobei
der mittlere zylindrische Abschnitt (20) zwei oder mehrere Verstärkungsringe (24) umfasst,
Endplatten (25) jeweils an beiden Enden in der Axialrichtung des mittleren zylindrischen Abschnitts (20) angeordnet sind, und
ein Abstand in der Axialrichtung zwischen der Endplatte (25) und dem Verstärkungsring (24), welcher der Endplatte am nächsten ist, kleiner ist als ein Abstand in der Axialrichtung zwischen zwei aus den Verstärkungsringen (24), die auf einer mittigen Seite in der Axialrichtung angeordnet sind.

3. Rotationsvorrichtung (1) nach Anspruch 1 oder 2, wobei
der mittlere zylindrische Abschnitt (20) drei oder mehrere Verstärkungsringe (24) umfasst und
eine Breite in radialer Richtung des Verstärkungsrings (24), der auf der mittigen Seite in der Axialrichtung angeordnet ist, kleiner ist als eine Breite in radialer Richtung des Verstärkungsrings (24), der auf jeder Endseite in der Axialrichtung angeordnet ist.

4. Rotationsvorrichtung (1) nach einem der Ansprüche 1 bis 3, wobei
die Magnetpolteile (22) des mittleren zylindrischen Abschnitts (20) nichtmagnetische Blöcke (22a), die an der Außenumfangsfläche des Verstärkungsrings (24) zugewandten Positionen angeordnet sind, und eine Vielzahl von segmentierten Magnetpolteilen (22b), die in der Axialrichtung mit den nichtmagnetischen Blöcken (22a) zwischen diesen unterteilt sind, umfassen.

5. Rotationsvorrichtung (1) nach einem der Ansprüche 1 bis 4, wobei
der äußere zylindrische Abschnitt (30) einen Magneten (32) und einen Außenzylinderkern (31), der aus einem Magnetmaterial besteht, umfasst.

6. Rotationsvorrichtung (1) nach einem der Ansprüche 1 bis 5, wobei
der mittlere zylindrische Abschnitt (20) ein Stator ist,
der äußere zylindrische Abschnitt (30) und der innere zylindrische Abschnitt (10) Rotoren sind, welche sich relativ zueinander drehen, und
die Rotationsvorrichtung (1) als Magnetgetriebevorrichtung betrieben wird.

7. Rotationsvorrichtung (1) nach einem der Ansprüche 1 bis 5, wobei
der äußere zylindrische Abschnitt (30) eine Spule (33) umfasst,
der äußere zylindrische Abschnitt (30) ein Stator ist,
der mittlere zylindrische Abschnitt (20) ein Niedriggeschwindigkeitsrotor ist,
der innere zylindrische Abschnitt (10) ein Hochgeschwindigkeitsrotor ist und
die Rotationsvorrichtung (1) als eine elektrische Magnetgetriebe-Rotationsmaschine betrieben wird.

## Revendications

1. Dispositif de rotation (1) comprenant une partie cylindrique interne (10), une partie cylindrique intermédiaire (20) et une partie cylindrique externe (30) qui sont agencées de manière concentrique autour d'un arbre de rotation (40), dans lequel
la partie cylindrique intermédiaire (20) inclut une partie annulaire (23) dans laquelle des pièces de pôle magnétique (22), et des entretoises (21) composées de corps continus le long de l'arbre de rotation (40) sont agencées en alternance dans une direction circonférentielle, et une bague de renforcement (24) pour supporter la partie annulaire (23),
la bague de renforcement (24) est disposée sur un côté radialement interne de la partie annulaire (23),
une surface circonférentielle externe de la bague de renforcement (24) est fixée aux surfaces circonférentielles internes des entretoises (20),
la partie cylindrique interne (10) inclut un noyau cylindrique interne (11) présentant une forme cylindrique, et une pluralité d'aimants cylindriques internes (12) disposés sur une surface circonférentielle externe du noyau cylindrique interne (11) de manière à être agencés dans la direction circonférentielle, et
la pluralité d'aimants cylindriques internes (12) sont divisés chacun en une pluralité de pièces dans une direction axiale, dans lequel
une extrémité sur un côté radialement interne de la bague de renforcement (24) est sur le côté radialement interne par rapport à une extrémité sur un côté radialement externe du noyau cylindrique interne (11), ou
une extrémité sur un côté radialement interne de la bague de renforcement (24) est sur le côté radialement interne par rapport aux extrémités sur un côté radialement externe des aimants cylindriques internes (12), et
une épaisseur dans la direction axiale de la bague de renforcement (24) est la plus petite dans une position au niveau de laquelle la bague de renforcement (24) fait face aux aimants cylindriques internes (12) dans la direction axiale.

2. Dispositif de rotation (1) selon la revendication 1, dans lequel
la partie cylindrique intermédiaire (20) inclut deux ou plus desdites bagues de renforcement (24),
des plaques d'extrémité (25) sont disposées respectivement aux deux extrémités dans la direction axiale de la partie cylindrique intermédiaire (20), et
une distance dans la direction axiale entre la plaque d'extrémité (25) et la bague de renforcement (24) qui est la plus proche de la plaque d'extrémité est inférieure à une distance dans la direction axiale entre deux des bagues de renforcement (24) situées sur un côté central dans la direction axiale.

3. Dispositif de rotation (1) selon la revendication 1 ou 2, dans lequel
la partie cylindrique intermédiaire (20) inclut trois ou plus desdites bagues de renforcement (24), et
une largeur dans une direction radiale de la bague de renforcement (24) située sur le côté central dans la direction axiale est inférieure à une largeur dans la direction radiale de la bague de renforcement (24) située sur chaque côté d'extrémité dans la direction axiale.

4. Dispositif de rotation (1) selon l'une quelconque des revendications 1 à 3, dans lequel
les pièces de pôle magnétique (22) de la partie cylindrique intermédiaire (20) incluent des blocs non magnétiques (22a) situés dans des positions faisant face à la surface circonférentielle externe de la bague de renforcement (24), et une pluralité de pièces de pôle magnétique segmentées (22b) divisées dans la direction axiale avec les blocs non magnétiques (22a) entre elles.

5. Dispositif de rotation (1) selon l'une quelconque des revendications 1 à 4, dans lequel
la partie cylindrique externe (30) inclut un aimant (32) et un noyau cylindrique extérieur (31) composé d'un matériau magnétique.

6. Dispositif de rotation (1) selon l'une quelconque des revendications 1 à 5, dans lequel
la partie cylindrique intermédiaire (20) est un stator,
la partie cylindrique externe (30) et la partie cylindrique interne (10) sont des rotors qui tournent l'un par rapport à l'autre, et
le dispositif de rotation (1) fonctionne comme un dispositif d'engrenage magnétique.

7. Dispositif de rotation (1) selon l'une quelconque des revendications 1 à 5, dans lequel
la partie cylindrique externe (30) inclut une bobine (33),
la partie cylindrique externe (30) est un stator,
la partie cylindrique intermédiaire (20) est un rotor à vitesse lente,
la partie cylindrique interne (10) est un rotor à grande vitesse, et
le dispositif de rotation (1) fonctionne comme une machine électrique rotative à engrenage magnétique.
